# EUROPÄISCHE PATENTSCHRIFT

(11) **EP 3 311 104 B1**
(45) Veröffentlichungstag und Bekanntmachung des Hinweises auf die Patenterteilung: **20.03.2019**
(21) Anmeldenummer: 16741522.3
(22) Anmeldetag: 16.06.2016
(51) Int. Cl.: G01B 5/06, G01B 5/08, G01B 5/12, G01B 5/207

(54) **MESSVORRICHTUNG**
MEASURING DEVICE
DISPOSITIF DE MESURE

(30) Priorität: 18.06.2015 AT 505142015
(43) Veröffentlichungstag der Anmeldung: 25.04.2018
(73) Patentinhaber: Henn GmbH & Co KG., 6850 Dornbirn (AT)
(72) Erfinder: MOOSBRUGGER, Christian, 6870 Bezau (AT)
(74) Vertreter: Burger, Hannes
(86) Internationale Anmeldenummer: PCT/AT2016/050210
(87) Internationale Veröffentlichungsnummer: WO 2016/201480

(56) Entgegenhaltungen:
- DE-A1-102008 020 972
- FR-A5- 2 098 722
- JP-A- S60 249 009

## Beschreibung

Die Erfindung betrifft eine Messvorrichtung, sowie ein Messverfahren zum Messen der Geometrie eines hohlzylindrischen Objektes.

Eine Verpressung eines Steckverbinders mit einem Endabschnitt einer Leitung, bei welcher die Presskraft in Abhängigkeit vom Weg auf unterschiedliche Werte geregelt wird, auch wegabhängige Kraftregelung genannt, geht aus der EP 1 762 312 A1 hervor. Der Endabschnitt der Leitung wird in einen Ringraum zwischen dem inneren hülsenförmigen ersten Wandabschnitt und dem äußeren hülsenförmigen zweiten Wandabschnitt eingesteckt, worauf mit einem Spreizwerkzeug der erste Wandabschnitt von innen her in Richtung zum äußeren Wandabschnitt gegen den im Ringraum zwischen den beiden Wandabschnitten eingesteckten Endabschnitt der Leitung eingedrückt wird. Dabei wird eine ringförmig umlaufende Pressnut im ersten Wandabschnitt ausgebildet. Um sicherzustellen, dass ein ausreichender Verpressgrad bzw. eine ausreichende Verpressung erreicht wird, ist vorgesehen, dass die Verpresskraft überwacht wird, wobei ein Sollwert der Verpresskraft vorgegeben ist und die aktuell aufgebrachte Verpresskraft mit diesem Sollwert verglichen wird.

Aus der EP 2 364 790 B1 ist eine weitere Pressmaschine bzw. ein Pressverfahren zum Verpressen eines Steckverbinders bekannt.

Die aus der EP 1 762 312 A1 und der EP 2 364 790 B1 bekannten Pressvorrichtungen weisen den Nachteil auf, dass die exakte Geometrie des zu verpressenden Schlauches bzw. Rohres nur bedingt vermessen werden kann, sodass eine Einhaltung der Fertigungstoleranzen des Schlauches bzw. Rohres nur bedingt kontrolliert werden kann.

Die DE 10 2008 020972 A1 offenbart eine Vorrichtung zum Prüfen der Maßgenauigkeiten von Trommelbremsbelägen in Bezug auf die vorgegebenen Dickenmaße und Referenzwerte für die Innen- und Außenradien und der lagegenauen Anordnung des Bohrbildes im Belag.

Die FR 2 098 722 A5 offenbart eine Messvorrichtung mit drei innenliegenden und drei außenliegenden Messtastern. Die Vorrichtung enthält eine drehbare Halterung zur Messung der Wandstärke eines Rotationsteiles, ist aber nicht zum Messen der Geometrie eines hohlzylindrischen Objekts geeignet.

Die JP S60 249009 A offenbart eine Vorrichtung zum Messen des axialen Dickenlaufs an einem konischen Endstück eines Rohres, jedoch mit nur einem innenliegenden und einem außenliegenden Messtaster.

Der vorliegenden Erfindung liegt die Aufgabe zugrunde eine Messeinrichtung zur Kontrolle der Geometrie eines hohlzylindrischen Objektes zu schaffen, bzw. ein geeignetes Messverfahren anzugeben.

Diese Aufgabe der Erfindung wird durch die Merkmale des Anspruches 1 bzw. durch die Verfahrensschritte gemäß dem Anspruch 10 gelöst.

Erfindungsgemäß ist eine Messvorrichtung zum Messen der Geometrie eines hohlzylindrischen Objektes ausgebildet. Die Messvorrichtung weist unter anderem drei innenliegende Messtaster mit außen angeordneten Abtastflächen zum Anlegen an eine Innenwandfläche des hohlzylindrischen Objektes und zumindest drei außenliegende Messtaster mit innen angeordneten Abtastflächen zum Anlegen an eine Außenwandfläche des hohlzylindrischen Objektes auf. Der innenliegende Messtaster ist jeweils einem der außenliegenden Messtaster zugehörig.

Die genauen Merkmale dieser Messvorrichtung sind im unabhängigen Anspruch 1 definiert.

Von Vorteil an der erfindungsgemäßen Ausbildung der Messvorrichtung ist, dass durch die innenliegenden Messtaster und durch die außenliegenden Messtaster eine Wandstärke des hohlzylindrischen Objektes gut gemessen werden kann. Insbesondere ist es durch die erfindungsgemäße Messvorrichtung möglich, die Wandstärke des hohlzylindrischen Objektes unabhängig von der Rundheit des hohlzylindrischen Objektes zu messen. Dies bringt insbesondere Vorteile bei der Vermessung von elastischen Schläuchen mit sich, da eine etwaige Verformung des elastischen Schlauches durch die Messvorrichtung in der Messung der Wandstärke nicht zu einem verfälschten Ergebnis führt.

Weiters kann es zweckmäßig sein, dass sowohl der innenliegende Messtaster als auch der jeweils zugehörige außenliegende Messtaster auf einem gemeinsamen Verfahrschlitten angeordnet sind und dadurch in Radialrichtung verstellbar sind, wobei ein Wegmesssensor die aktuelle Position des Verfahrschlittens aufnimmt. Von Vorteil ist hierbei, dass durch den gemeinsamen Verfahrschlitten der innenliegende Messtaster und der zugehörige außenliegende Messtaster gemeinsam verfahren werden können und somit die Messvorrichtung einfach an verschiedene Durchmesser angepasst werden kann.

Ferner kann vorgesehen sein, dass die Verfahrschlitten durch ein Mittel zum Speichern von Energie, wie etwa eine Druckfeder, radial nach außen gedrückt sind und dass eine Konturscheibe zum Verstellen der Verfahrschlitten ausgebildet ist, wobei jeder der Verfahrschlitten ein Abrollelement aufweist, welches an einer innenliegenden Konturfläche der Konturscheibe anliegt. Von Vorteil ist hierbei, dass die Verfahrschlitten durch die Druckfeder nach außen gedrückt sind und mittels der Konturscheibe alle Verfahrschlitten gemeinsam nach innen gestellt werden können. Hierbei ist nur ein einziger Antrieb zum Verstellen der Verfahrschlitten notwendig. Wenn die innenliegenden Messtaster während des Messvorganges soweit nach außen verstellt werden bis sie an der Innenwandfläche des hohlzylindrischen Objektes anliegen, hebt sich die Konturfläche der Konturscheibe von den Abrollelementen ab und jeder der innenliegenden Messtaster wird mit einer voreingestellten bzw. voreinstellbaren Federkraft gegen die Innenwandfläche des hohlzylindrischen Objektes gedrückt. Somit werden alle innenliegenden Messtaster mit gleich großer Kraft gegen das hohlzylindrische Objekt gedrückt. Darüber hinaus kann vorgesehen sein, dass die Konturscheibe mittels drei außenliegenden Halterollen drehbar gelagert ist. Von Vorteil ist hierbei, dass dadurch die Konturscheibe einfach in der Messvorrichtung aufgenommen werden kann, wobei durch die drei außenliegenden Halterollen die Konturscheibe statisch bestimmt in der Messvorrichtung aufgenommen ist.

Vorteilhaft ist auch eine Ausprägung, gemäß welcher vorgesehen sein kann, dass die Konturscheibe mittels einem Verstellmittel in dessen Winkelstellung verstellbar ist. Von Vorteil ist hierbei, dass durch die Konturscheibe mit nur einem Verstellmittel alle Verfahrschlitten gemeinsam in deren radialer Richtung in Richtung zum Zentrum oder vom Zentrum weg verstellt werden können.

Gemäß einer Weiterbildung ist es möglich, dass das Verstellmittel durch einen Linearzylinder, insbesondere einen Pneumatikzylinder, gebildet ist, wobei der Linearzylinder an einem äußeren Umfang der Konturscheibe befestigt ist. Von Vorteil ist hierbei, dass ein Linearzylinder, insbesondere ein Pneumatikzylinder, einfach aufgebaut ist, sodass die Fehlereranfälligkeit des Verstellmittels gering gehalten werden kann. Darüber hinaus kann ein Linearzylinder sehr hohe Verfahrgeschwindigkeiten erreichen, sodass die Zykluszeit zum Messen der Geometrie des hohlzylindrischen Objektes möglichst gering gehalten werden kann.

Erfindungsgemäß ist jeweils der außenliegende Messtaster mittels einem Verstellmittel, beispielsweise einem Pneumatikzylinder, relativ zum innenliegenden Messtaster verstellbar, wobei jeweils ein Wegmesssensor die aktuelle Position des außenliegenden Messtasters relativ zum innenliegenden Messtaster aufnimmt. Von Vorteil ist hierbei, dass jeder der außenliegenden Messtaster mit einem gleichen Druck auf die Außenwandfläche des hohlzylindrischen Objektes aufdrücken kann und somit die Wandstärke des hohlzylindrischen Objektes genau bestimmt werden kann.

Darüber hinaus kann vorgesehen sein, dass eine Markiervorrichtung zum Markieren eines vermessenen hohlzylindrischen Objektes ausgebildet ist. Von Vorteil ist hierbei, dass als Gutteil vermessene hohlzylindrische Objekte markiert werden können und somit in einem nachfolgenden Prozess die Verwendung von noch nicht vermessenen hohlzylindrischen Objekten oder von als Schlechtteil vermessenen hohlzylindrischen Objekten weitestgehend vermieden werden kann.

Weiters kann vorgesehen sein, dass die Markiervorrichtung zumindest eine Farbdüse zum Aufbringen eines Farbmittels auf die Außenwandfläche des hohlzylindrischen Objektes umfasst. Von Vorteil ist hierbei, dass mittels der Farbdüse einfach ein Farbmittel auf die Außenmantelfläche des hohlzylindrischen Objektes aufgebracht werden kann, wobei eine Anpassung der Markiervorrichtung an verschiedene Typen von hohlzylindrischen Objekten nicht zwingend erforderlich ist.

Weiters kann vorgesehen sein, dass die Abtastflächen des innenliegenden Messtasters und des außenliegenden Messtasters auf einer durch das Zentrum der Messtasteranordnung verlaufenden Geraden liegen. Dabei ist von Vorteil, dass dadurch die Wandstärke des hohlzylindrischen Objektes gut gemessen werden kann. Durch die Messanordnung wird dabei keine übermäßige Verformung des hohlzylindrischen Objektes erzeugt.

Weiters ist ein Messverfahren zum Vermessen der Geometrie eines hohlzylindrischen Objektes vorgesehen, wobei die Messvorrichtung zumindest drei innenliegende Messtaster mit außen angeordneten Abtastflächen zum Anlegen an eine Innenwandfläche des hohlzylindrischen Objektes und zumindest drei außenliegende Messtaster mit innen angeordneten Abtastflächen zum Anlegen an eine Außenwandfläche des hohlzylindrischen Objektes aufweist, wobei jeweils einer der innenliegenden Messtaster einem der außenliegenden Messtaster zugehörig ist. Das Messverfahren umfasst folgende Verfahrensschritte:
- Bereitstellen der innenliegenden Messtaster und der außenliegenden Messtaster in einer Obj ektaufnahmestellung;
- Einsetzen des zu vermessenden hohlzylindrischen Objektes in die Messvorrichtung;
- Auseinanderfahren der innenliegenden Messtaster bis diese mit ihren außen angeordneten Abtastflächen an der Innenwandfläche des hohlzylindrischen Objektes anliegen;
- Verfahren der außenliegenden Messtaster bis diese mit ihren innen angeordneten Abtastflächen an der Außenwandfläche des hohlzylindrischen Objektes anliegen;
- Messen der Geometriedaten des hohlzylindrischen Objektes;
- Freigeben des hohlzylindrischen Objektes durch Verfahren der innenliegenden Messtaster und der außenliegenden Messtaster in die Objektaufnahmestellung.

Von Vorteil an diesem Messverfahren ist, dass die Geometrie des hohlzylindrischen Objektes, insbesondere dessen Wandstärke, einfach und schnell vermessen werden kann, wobei die Wandstärke des hohlzylindrischen Objektes bei Bedarf unabhängig von dessen Durchmesser vermessen werden kann und durch das Messverfahren auch elastische Schläuche möglichst exakt vermessen werden können.

Entsprechend einer vorteilhaften Weiterbildung kann vorgesehen sein, dass zum Auseinanderfahren der innenliegenden Messtaster diese mit den außenliegenden Messtastern an einem gemeinsamen Verfahrschlitten angeordnet sind, wobei der Verfahrschlitten durch ein Mittel zum Speichern von Energie, wie etwa eine Druckfeder, nach außen gedrückt wird und wobei eine Konturscheibe zum Verstellen der Verfahrschlitten ausgebildet ist und jeder der Verfahrschlitten ein Abrollelement aufweist, welches an einer innenliegenden Konturfläche der Konturscheibe anliegt und wobei durch eine Verdrehung der Konturscheibe die Verfahrschlitten in radialer Richtung bewegt werden können, wobei die Konturscheibe zum Messen in eine Messstellung verdreht wird, in welcher die innenliegenden Messtaster durch die Federkraft belastet an die Innenwandfläche des hohlzylindrischen Objektes gedrückt werden und in welcher sich die innenliegende Konturfläche der Konturscheibe von den Abrollelementen abhebt. Von Vorteil ist hierbei, dass dadurch die einzelnen Taster zum Messen der Wandstärke mit einer gleichen Kraft auf das hohlzylindrische Objekt aufdrücken, wodurch ein möglichst genaues Messergebnis erzielt werden kann.

Insbesondere kann es vorteilhaft sein, dass vor dem Freigeben des hohlzylindrischen Objektes dieses, wenn es als Gutteil ermittelt wird, mittels einer Farbdüse markiert wird. Von Vorteil ist hierbei, dass das Gutteil in einem weiteren folgenden Produktionsprozess als solches erkannt werden kann und somit ein unerwünschter Verbau von Ausschussware vermieden werden kann.

Ferner kann es zweckmäßig sein, dass an einem Anzeigegerät, insbesondere einem Bildschirm, die Sollabmessungen der Geometrie des hohlzylindrischen Objektes in Form eines Toleranzbereiches angezeigt werden und dass die aktuellen Istabmessungen der Geometrie des hohlzylindrischen Objektes grafisch dargestellt werden. Von Vorteil ist hierbei, dass somit einem Maschinenbediener fehlerhafte Stellen in der Geometrie des hohlzylindrischen Objektes grafisch dargestellt werden können.

Darüber hinaus kann vorgesehen sein, dass die zu vermessende Type des hohlzylindrischen Objektes voreingestellt werden kann, sodass die Objektaufnahmestellung an die Geometrie des hohlzylindrischen Objektes angepasst ist. Von Vorteil ist hierbei, dass dadurch die nötigen Verfahrwege verkürzt werden können und somit auch die Zykluszeit zur Vermessung des hohlzylindrischen Objektes verkürzt werden kann.

Weiters kann vorgesehen sein, dass die außenliegenden Messtaster nach innen gefahren werden, wenn die Konturscheibe ihre Messstellung erreicht hat. Von Vorteil ist hierbei, dass das hohlzylindrische Objekt durch die innenliegenden Messtaster geklemmt werden kann und anschließend die Außenliegenden Messtaster zur Vermessung des hohlzylindrischen Objektes an dieses herangefahren werden können.

Schließlich kann vorgesehen sein, dass eine Wandstärke des hohlzylindrischen Objektes durch die Relativposition des außenliegenden Messtasters zum innenliegenden Messtaster gemessen wird. Von Vorteil ist hierbei, dass auch bei einer starken Konturabweichung der Außenkontur des hohlzylindrischen Objektes dessen Wandstärke korrekt vermessen werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine Ansicht von vorne auf eine Messvorrichtung;
- Fig. 2: eine perspektivische Ansicht von links unten auf die Messvorrichtung;
- Fig. 3: eine perspektivische Ansicht von rechts oben auf die Messvorrichtung;
- Fig. 4: eine perspektivische Ansicht auf die Messvorrichtung, wobei eine Konturscheibe ersichtlich ist;
- Fig. 5: eine perspektivische Detailansicht auf eine Messtasteranordnung der Messvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

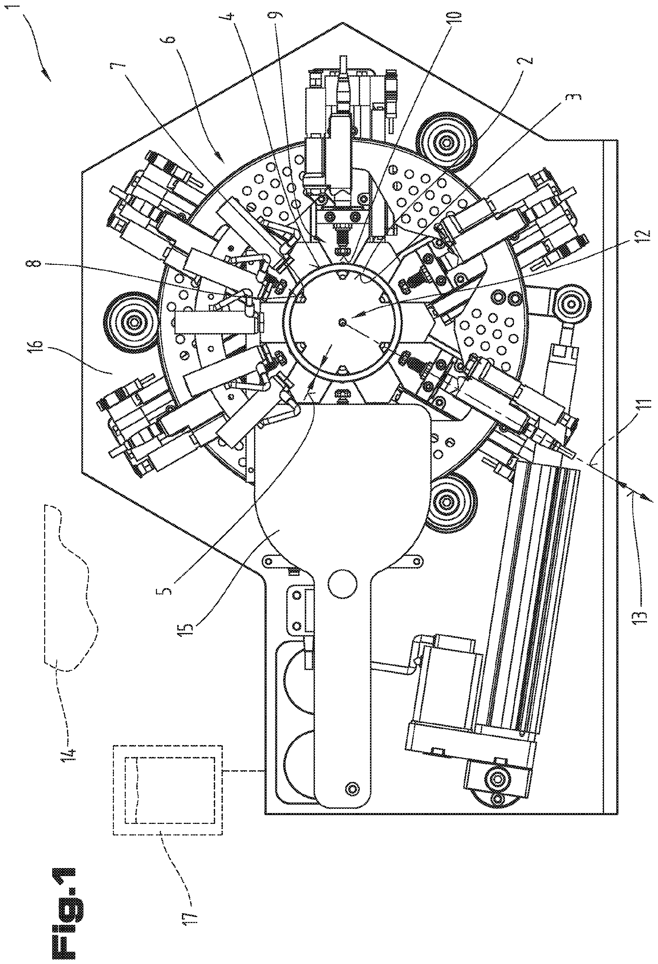

Fig. 1 zeigt eine Ansicht von vorne einer Messvorrichtung 1 zum Messen der Geometrie eines hohlzylindrischen Objektes 2. Als Messvorrichtung 1 wird die eigenständige Maschine gesehen, welche für das Vermessen des hohlzylindrischen Objektes 2 geeignet ist. Das hohlzylindrische Objekt 2 kann beispielsweise in Form eines Rohres oder eines Schlauch ausgebildet sein, welcher als Luftleitung für den Ansaugstrang eines Kraftfahrzeugmotors dient und mit einer Kupplung verpresst wird.

Das hohlzylindrische Objekt 2 weist eine Innenwandfläche 3 und eine Außenwandfläche 4 auf. Der Abstand zwischen Außenwandfläche 4 und Innenwandfläche 3 wird als Wandstärke 5 bezeichnet.

Um das hohlzylindrische Objekt 2 in einer Kupplung verpressen zu können, kann es notwendig sein, dass vor dem Start des Verpressvorganges die Wandstärke 5 oder sonstige Geometriedaten des hohlzylindrischen Objektes 2 ermittelt werden. Dadurch kann erreicht werden, dass die Pressung zwischen Kupplung und hohlzylindrischem Objekt 2 mediendicht ist und den Sicherheitsanforderungen entspricht. Insbesondere soll es auch möglich sein, die Wandstärke 5 bei hohlzylindrischen Objekten 2 zu ermitteln, welche in Form eines elastischen Schlauches ausgebildet sind.

Um die Wandstärke 5 des hohlzylindrischen Objektes 2 ermitteln zu können, umfasst die Messvorrichtung 1 eine Messtasteranordnung 6. Die Messtasteranordnung 6 umfasst innenliegende Messtaster 7 mit außen angeordneten Abtastflächen 8, welche zum Anlegen an die Innenwandfläche 3 des hohlzylindrischen Objektes 2 ausgebildet sind. Die Abstastflächen 8 des innenliegenden Messtasters 7 sind vorzugsweise abgerundet ausgebildet, sodass der innenliegende Messtaster 7, insbesondere die Abtastfläche 8 nur an einer Berührlinie an der Innenwandfläche 3 aufliegt und nicht flächig an dieser aufliegt. Dies bringt den Vorteil mit sich, dass die Messung genauer werden kann und dass hohlzylindrische Objekte 2 mit verschieden großen Durchmessern vermessen werden können. In einer weiteren, nicht näher dargestellten Ausführungsvariante kann vorgesehen sein, dass die innenliegenden Messtaster 7 eine kugelförmige Abstastfläche 8 aufweisen. Dadurch kann der innenliegende Messtaster 7 an einem Berührpunkt an der Innenwandfläche 3 des hohlzylindrischen Objektes 2 aufliegen. Somit kann die Genauigkeit der Messung weiter erhöht werden.

Grundsätzlich kann die Messvorrichtung 1 beliebig viele, innenliegende Messtaster 7 umfassen, jedoch hat es sich als vorteilhaft erwiesen, wenn zumindest drei innenliegende Messtaster 7 ausgebildet sind, wobei in einer besonders vorteilhaften Ausgestaltung der Messvorrichtung 1, welche in Fig. 1 dargestellt ist, sechs innenliegende Messtaster 7 ausgebildet sind.

Jeder der innenliegenden Messtaster 7 korrespondiert mit einem außenliegenden Messtaster 9, wobei jeder außenliegende Messtaster 9 eine innen angeordnete Abtastfläche 10 zum Anliegen an die Außenwandfläche 4 des hohlzylindrischen Objektes 2 aufweist.

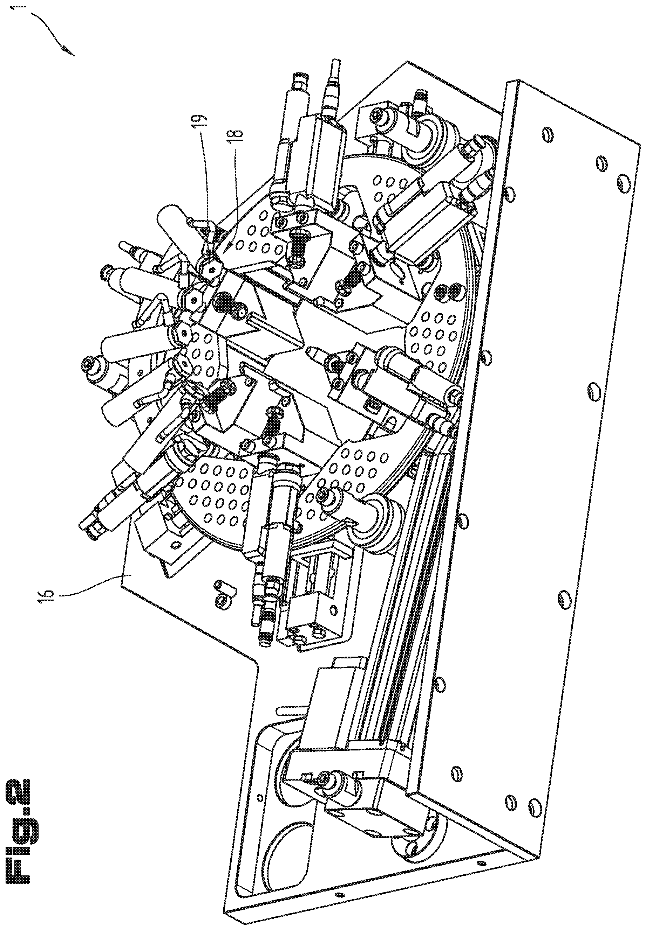

Insbesondere kann vorgesehen sein, dass die Berührlinien zwischen innenliegendem Messtaster 7 und Innenwandfläche 3 sowie zwischen außenliegendem Messtaster 9 und Außenwandfläche 4 auf einer gemeinsamen Geraden 11 liegen, welche durch das Zentrum 12 der Messtasteranordnung 6 verläuft. Sowohl die innenliegenden Messtaster 7 als auch die außenliegenden Messtaster 9 können entlang der Geraden 11 und daher in Radialrichtung 13 verschoben werden. Der genaue Mechanismus zum Verschieben der Messtaster 7, 9 wird in weiterer Folge in den Fig. 2 bis 5 noch näher erläutert.

Der Übersichtlichkeit halber ist das Gehäuse 14 der Messvorrichtung 1 nur schematisch angedeutet und nicht näher dargestellt. Das Gehäuse 14 kann einen schützenden Mantel um das Innenleben der Messvorrichtung 1 bilden, sodass diese als eigenständig funktionierende Maschine in einem Produktionsbetrieb eingesetzt werden kann. Insbesondere ist es denkbar, dass das Gehäuse 14 als staubdicht geschlossenes Gehäuse ausgebildet ist, wobei an der Vorderseite des Gehäuses eine kreisrunde Öffnung ausgebildet ist, durch welche die Messtaster 7, 9 zugänglich sind. Weiters kann vorgesehen sein, dass ein Schieber 15 ausgebildet ist, welcher zum Verschließen dieser kreisrunden Öffnung im Gehäuse 14 dient und somit im nicht verwendeten Zustand die Messvorrichtung 1, insbesondere deren innenliegenden Messbestandteile, von einer schmutzigen Industrieumgebung weitestgehend abgeschottet werden können. Wie aus Fig. 1 weiters ersichtlich, kann vorgesehen sein, dass eine Basisplatte 16 ausgebildet ist, an welcher die einzelnen Bauteile bzw. Bestandteile der Messvorrichtung 1 angeordnet bzw. befestigt sind.

Weiters kann vorgesehen sein, dass die Messvorrichtung 1 ein Anzeigegerät 17 umfasst, oder dass ein Anzeigegerät 17 an die Messvorrichtung 1 gekoppelt ist. Das Anzeigegerät 17 kann dazu ausgebildet sein, um optisch und/oder akustisch anzeigen zu können, ob das an der Messvorrichtung 1 vermessene hohlzylindrische Objekt 2 innerhalb der Toleranzgrenzen liegt.

Fig. 2 zeigt die Messvorrichtung 1 in einer perspektivischen Ansicht von schräg unten, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen. In der Ansicht nach Fig. 2 ist der Schieber 15 zum Verdecken einer frontseitigen Öffnung im Gehäuse 14 nicht dargestellt.

Wie in Fig. 2 gut ersichtlich, kann vorgesehen sein, dass an der Messvorrichtung 1 eine Markiervorrichtung 18 ausgebildet ist, welche zum Markieren des hohlzylindrischen Objektes 2 dient. Die Markiervorrichtung 18 kann insbesondere eingesetzt werden, um hohlzylindrische Objekte 2 zu markieren, welche vermessen wurden und welche innerhalb der Toleranzgrenzen liegen und somit als Gutteil identifiziert wurden. Insbesondere kann vorgesehen sein, dass im weiteren Fertigungsprozess zur Herstellung einer Leitungsbaugruppe für den Ansaugstrang eines Kraftfahrzeugmotors bei jedem hohlzylindrischen Objekt 2 vor dessen Verwendung abgefragt wird, ob dieses als Gutteil vermessen wurde.

Für die Markiervorrichtung 18 können verschiedene Arten von Markiermechanismen eingesetzt werden. Insbesondere ist es denkbar, dass eine oder mehrere Farbdüsen 19 ausgebildet sind, welche die Außenwandfläche 4 des hohlzylindrischen Objektes 2 mit einem Farbstoff kennzeichnen. Der Farbstoff kann insbesondere eine Tinte sein, welche durch die Farbdüse 19 aufgespritzt wird. Die Farbe des Farbstoffes ist für dessen Funktion nicht relevant. Relevant ist nur, dass der auf das hohlzylindrische Objekt 2 aufgebrachte Farbstoff durch ein Kamerasystem erfassbar ist.

Als vorteilhaft hat es sich erwiesen, wenn ein Farbstoff verwendet wird, welcher beispielsweise nur unter UV-Licht sichtbar ist. Somit kann erreicht werden, dass nach Fertigstellung der Leitung die am hohlzylindrischen Objekt 2 angebrachten Markierungen bei normalen Lichtverhältnissen nicht sichtbar sind.

Alternativ zu der Ausführung der Markiervorrichtung 18 mit einer Farbdüse 19 ist es auch denkbar, dass die Markiervorrichtung 18 einen Laser umfasst, welcher Laser beispielsweise einen Strichcode an der Außenwandfläche 4 des hohlzylindrischen Objektes 2 anbringen kann. Diese Markierung kann zum eindeutigen Identifizieren und Zuordnen des hohlzylindrischen Objektes 2 zu den Vermessungsdaten der Geometrie herangezogen werden.

Insbesondere ist es möglich, dass bei einer Markierung, welche das hohlzylindrische Objekt 2 eindeutig zuordenbar kennzeichnet, die genauen Geometriedaten des hohlzylindrischen Objektes 2 einer im Produktionsprozess nachfolgenden Pressmaschine übergeben werden, sodass ein anschließender Pressvorgang in Abhängigkeit vom Ergebnis der durchgeführten Messung durchgeführt werden kann.

Weiters ist es auch denkbar, dass die Messergebnisse abgespeichert werden, um im Produktlebenszyklus eine verbesserte Qualitätskontrolle zu ermöglichen.

In wieder einer anderen Ausführung ist es möglich, dass die Markiervorrichtung 18 beispielsweise einen Prägestempel umfasst und dass ein Gutteil mit einer Prägung versehen wird.

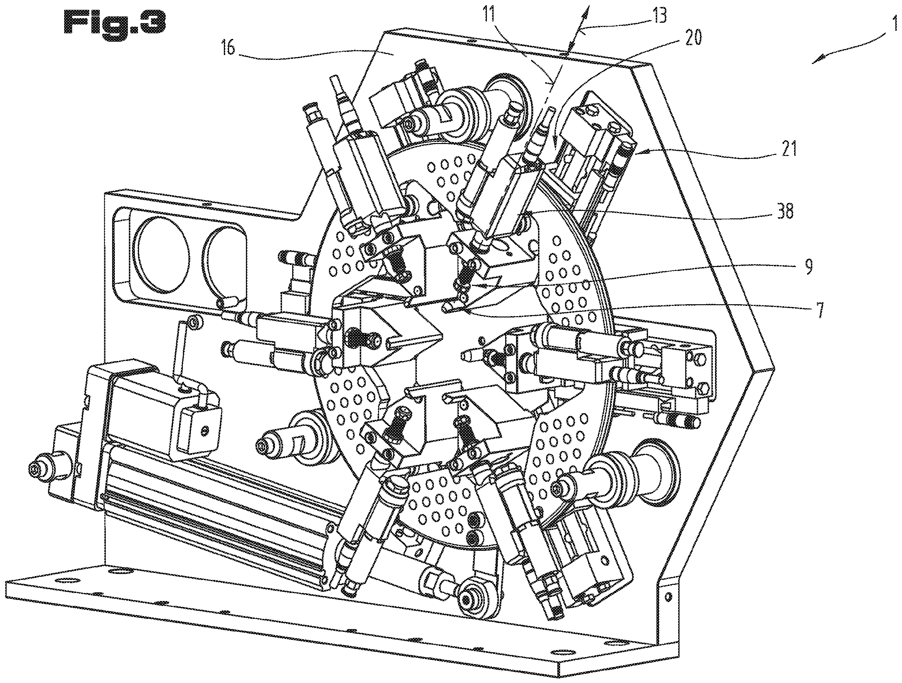

Fig. 3 zeigt die Messvorrichtung 1 in einer perspektivischen Ansicht von schräg oben, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Wie aus Fig. 3 ersichtlich, kann vorgesehen sein, dass sowohl der innenliegende Messtaster 7 als auch der jeweils zugehörige außenliegende Messtaster 9 auf einem gemeinsamen Verfahrschlitten 20 angeordnet sind. Insbesondere kann vorgesehen sein, dass der Verfahrschlitten 20 eine lineare Führungsanordnung, wie etwa eine Schwalbenschwanzführung oder eine Führung mit Wälzlagerelementen umfasst. Der Verfahrschlitten 20 ist vorzugsweise derart angeordnet, dass der innenliegende Messtaster 7 und der außenliegende Messtaster 9 gemeinsam entlang der Geraden 11 verschoben werden können und somit in Radialrichtung 13 verstellbar sind.

Weiters kann ein Wegmesssensor 21 vorgesehen sein, welcher die aktuelle Position des Verfahrschlittens 20 aufnimmt. Der Wegmesssensor 21 kann mit dem Verfahrschlitten 20 bewegungsgekoppelt sein. Als Wegmesssensor 21 können sämtliche Sensoren verwendet werden, welche eine ausreichend hohe Auflösung und Genauigkeit aufweisen um die Geometrie des hohlzylindrischen Objektes 2 erfassen zu können. Die erforderliche Auflösung und Messgenauigkeit kann bis zu einem tausendstel mm betragen.

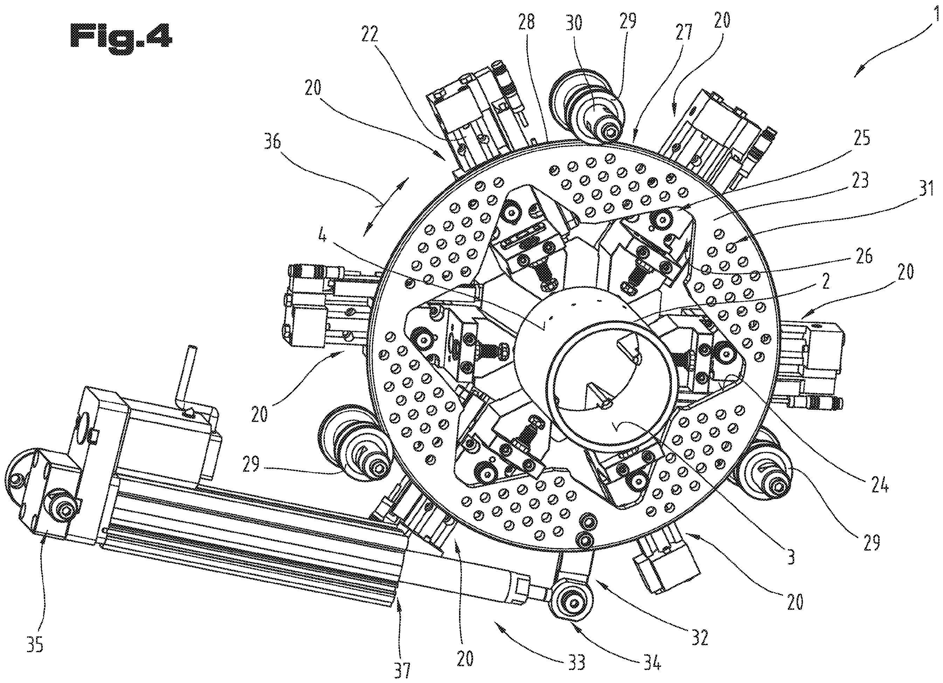

Fig. 4 zeigt eine weitere perspektivische Ansicht der Messvorrichtung 1, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen. In der Fig. 4 sind der Übersichtlichkeit halber weitere Bauelemente ausgeblendet.

Wie aus Fig. 4 ersichtlich, kann vorgesehen sein, dass die einzelnen Verfahrschlitten 20 durch ein Mittel zum Speichern von Energie 22 radial nach außen gedrückt sind. Weiters kann vorgesehen sein, dass eine Konturscheibe 23 ausgebildet ist, welche eine Konturfläche 24 aufweist und welche zum Positionieren der Verfahrschlitten 20 dient. Insbesondere kann vorgesehen sein, dass die Verfahrschlitten 20 ein Abrollelement 25 aufweisen, welches an der Konturfläche 24 der Konturscheibe 23 anliegt. Durch diesen beschriebenen Aufbau kann erreicht werden, dass die Verfahrschlitten 20 durch das Mittel zum Speichern von Energie 22 nach außen gedrückt werden, bis das Abrollelement 25 an der Konturfläche 24 der Konturscheibe 23 anliegt. Bei einer Winkelverdrehung der Konturscheibe 23 kann somit eine radiale Verschiebung aller Verfahrschlitten 20 gleichzeitig erreicht werden.

Das Mittel zum Speichern von Energie 22 kann beispielsweise als Druckfeder oder etwa als Zugfeder, insbesondere als Schraubenfeder ausgebildet sein. Alternativ dazu ist es auch denkbar, dass das Mittel zum Speichern von Energie 22 etwa in Form einer Gasfeder ausgebildet ist.

Das Abrollelement 25 wird vorzugsweise durch eine am Verfahrschlitten 20 gelagerte Rolle gebildet. In einer weiteren Variante ist es auch denkbar, dass das Abrollelement 25 beispielsweise nur ein Kugellager umfasst, wobei der äußere Ring des Kugellagers als Kontaktfläche zur Anlage an der Konturfläche 24 ausgebildet ist.

In wieder einer anderen Ausführungsvariante ist es denkbar, dass das Abrollelement 25 nicht als kugelgelagertes Element ausgebildet ist, sondern dass das Abrollelement 25 als starrer Zapfen ausgebildet ist. Eine derartige Ausführung bringt jedoch den Nachteil mit sich, dass dieser starre Zapfen bzw. die Konturfläche 24 der Konturscheibe 23 einem erhöhten Verschleiß unterliegt.

Die Konturfläche 24 kann insbesondere sternförmig in der Konturscheibe 23 ausgebildet sein, wobei für jeden Verfahrschlitten 20 eine Vertiefung 26 vorgesehen ist. Die Vertiefung 26 ist derart ausgebildet, dass das Abrollelement 25 darin hinein gleiten kann.

Wie aus Fig. 4 weiters ersichtlich, kann vorgesehen sein, dass die Konturscheibe 23 an deren äußeren Umfang 27 eine teilweise zylindrische Formgebung aufweist, wobei die Kanten abgerundet sein können.

Weiters kann vorgesehen sein, dass die Messvorrichtung 1 vorzugsweise drei Halterollen 29 umfasst, durch welche Halterollen 29 die Konturscheibe 23 drehbar in der Messvorrichtung 1 gelagert ist. Die Halterollen 29 können auf Befestigungsbolzen 30 gelagert sein und somit mit der Messvorrichtung 1 verbunden sein. Insbesondere ist es denkbar, dass die Befestigungsbolzen 30 exzentrisch ausgebilet sind, sodass durch Verdrehung der Befestigungsbolzen 30 eine korrekte Klemmung der Konturscheibe 23 eingestellt werden kann.

Die Halterollen 29 können an deren Außenumfang vorzugsweise V-förmig bzw. mit einer runden, nach innen ragenden Nut ausgebildet sein, wobei insbesondere die Formgebung der Halterollen 29 mit der Formgebung des äußeren Umfanges 27 der Konturscheibe 23 korrespondiert. Alternativ dazu kann vorgesehen sein, dass die Konturscheibe 23 eine am äußeren Umfang 27 angeordnete Nut aufweist und dass die Halterollen 29 damit korrespondierende an deren Umfang angeordnete Wülste aufweisen, sodass die Konturscheibe 23 formschlüssig in den Halterollen 29 aufgenommen ist.

Die Halterollen 29 können vorzugsweise ebenfalls kugelgelagert an einem der Befestigungsbolzen 30 aufgenommen sein.

Weiters kann vorgesehen sein, dass die Konturscheibe 23 mehrere Löcher 31 aufweist, welche einerseits zur Reduktion des Gewichtes der Konturscheibe 23 dienen können und welche darüber hinaus als Befestigungslöcher für diverse Anbauteile dienen können.

Weiters kann vorgesehen sein, dass mittels zweier dieser Löcher 31 ein Hebelelement 32 an der Konturscheibe 23 befestigt ist, welches Hebelelement 32 über den äußeren Umfang 27 der Konturscheibe 23 hinaussteht und zur Verbindung mit einem Verstellmittel 33 dient. Das Verstellmittel 33 ist mittels einem ersten Drehgelenk 34 mit dem Hebelelement 32 verbunden und mittels einem zweiten Drehgelenk 35 mit der Basisplatte 16 der Messvorrichtung 1 verbunden. Durch das Verstellmittel 33 kann eine Winkelstellung 36 der Konturscheibe 23 verändert werden und somit die einzelnen Verfahrschlitten 20 in Radialrichtung 13 zum Zentrum 12 hin oder vom Zentrum 12 weg verschoben werden.

Das Verstellmittel 33 kann beispielsweise aus einem Pneumatikzylinder oder einen Hydraulikzylinder oder aber auch durch ein elektrisch verstellbares Verstellmittel, wie etwa einen Elektrozylinder, gebildet sein. In einer weiteren Alternativvariante ist es beispielsweise auch denkbar, dass ein Elektromotor, wie etwa ein Servomotor in eine an der Konturscheibe 23 eingebrachte Verzahnung eingreift.

In einer weiteren Alternativvariante ist auch denkbar, dass die Konturscheibe 23 direkt mit einem Drehantrieb gekoppelt ist, welcher Drehantrieb etwa elektrisch oder als Drehzylinder ausgeführt ist.

Mittels dem Verstellmittel 33 kann erreicht werden, dass die Konturscheibe 23 und damit die innenliegenden Messtaster 7 zwischen einer Objektaufnahmestellung und einer Messstellung verschoben werden. Die Objektaufnahmestellung ist jene Stellung, in welcher die innenliegenden Messtaster 7 soweit als möglich nach innen verschoben sind, um das hohlzylindrische Objekt 2 aufnehmen zu können. Die Messstellung ist jene Stellung in welcher das hohlzylindrische Objekt 2 durch die Messvorrichtung 1 vermessen werden kann.

Neben einer ersten Ausbildung in welcher vorgesehen ist, dass das Verstellmittel 33 nur zwei Stellungen anfahren kann, ist es auch denkbar, dass das Verstellmittel 33 über einen Wegmesssensor 37 verfügt und somit beliebig viele Stellungen anfahren kann.

Anhand der Fig. 4 wird in weiterer Folge der Messvorgang erklärt. Beim Start des Messzyklus sind die innenliegenden Messtaster 7 soweit in Richtung Zentrum 12 verschoben, dass das hohlzylindrische Objekt 2 einfach in die Messtaster 7 eingesetzt werden kann. Ist das hohlzylindrische Objekt 2 korrekt in der Messvorrichtung 1 positioniert, so kann der Messvorgang gestartet werden. Hierbei wird die Konturscheibe 23 gegen den Uhrzeigersinn verdreht, sodass das Abrollelement 25 und somit der Verfahrschlitten 20 mit den darauf positionierten Messtastern 7, 9 in Radialrichtung 13 nach außen verschoben wird. Die Konturscheibe 23 wird dabei so weit verdreht bis die innenliegenden Messtaster 7 an der Innenwandfläche 3 des hohlzylindrischen Objektes 2 anlegen und sich die Konturfläche 24 der Konturscheibe 23 von den Abrollelementen 25 abhebt.

Die Konturscheibe 23 wird insbesondere so weit verdreht bis keines der Abrollelemente 25 die Konturfläche 24 berührt. In diesem ersten Zwischenzustand werden die innenliegenden Messtaster 7 mittels dem Mittel zum Speichern von Energie 22 gegen die Innenwandfläche 3 des hohlzylindrischen Objektes 2 gedrückt. Dadurch werden die innenliegenden Messtaster 7 mit einer bestimmten Kraft gegen die Innenwandfläche 3 des hohlzylindrischen Objektes 2 gedrückt. In einem weiteren Verfahrensschritt werden nun die außenliegenden Messtaster 9 mittels einem Verstellmittel 38 gegen die Außenwandfläche 4 des hohlzylindrischen Objektes 2 gedrückt. Über den Wegmesssensor 21 des Verfahrschlittens 20 kann nun die Position des innenliegenden Messtasters 7 ermittelt werden und über einen weiteren Wegmesssensor 39 kann die Position des außenliegenden Messtasters 9 relativ zum innenliegenden Messtaster 7 ermittelt werden. Dadurch kann der Innendurchmesser, der Außendurchmesser und die Wandstärke 5 des hohlzylindrischen Objektes 2 berechnet werden.

In einer Alternativvariante ist es auch denkbar, dass der Verfahrschlitten 20 über keinen Wegmesssensor verfügt, um die Lage der innenliegenden Messtaster 7 zu erfassen, sondern dass nur der Wegmesssensor 39 ausgebildet ist, welcher die Lage des außenliegenden Messtasters 9 erfasst und somit nur eine Wandstärke 5 des hohlzylindrischen Objektes 2 ermittelt werden kann.

In einer möglichen Ausgestaltungsvariante kann vorgesehen sein, dass nach dem Erfassen der Geometrie des hohlzylindrischen Objektes 2, dieses wenn es innerhalb der Toleranzgrenzen liegt und somit als Gutteil erkannt wurde mittels der Markiervorrichtung 18 markiert wird, um somit einer nachfolgenden Verpressmaschine anzeigen zu können, dass das hohlzylindrische Objekt 2 verbaut werden kann.

In einem weiteren Verfahrensschritt nach dem Erfassen der Geometrie des hohlzylindrischen Objektes 2 werden die außenliegenden Messtaster 9 wieder nach außen bewegt und anschließend die Konturscheibe 23 wieder so verdreht, dass die innenliegenden Messtaster 7 entgegen der Kraft des Mittel zum Speichern von Energie 22 nach innen gedrückt werden. Dadurch wird das vermessene hohlzylindrische Objekt 2 wieder freigegeben und die innenliegenden Messtaster 7 in eine Position verfahren, in welcher ein neues hohlzylindrisches Objekt 2 aufgenommen werden kann.

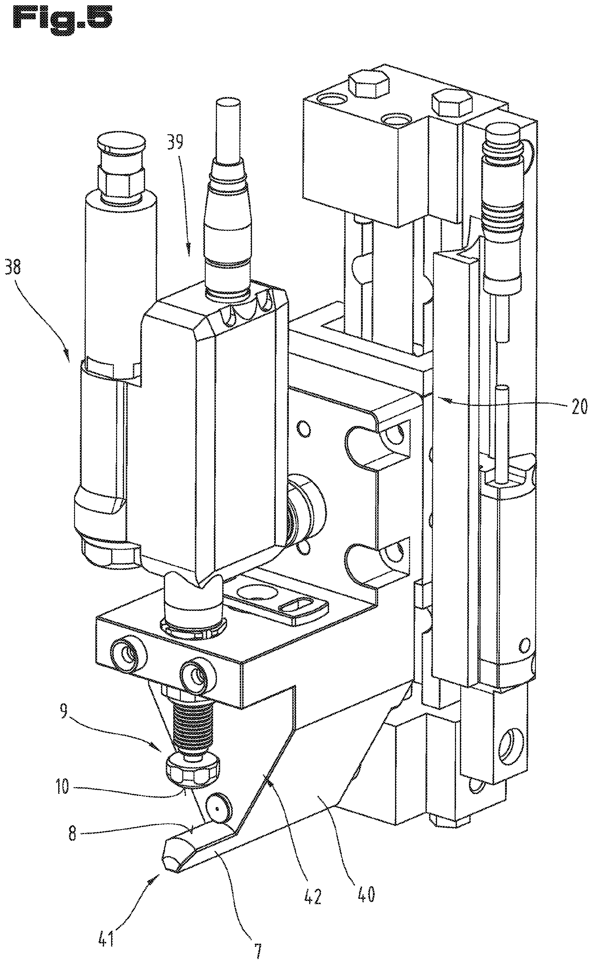

Das Verstellmittel 38 bzw. der Aufbau des Verfahrschlittens 20 wird anhand der Fig. 5 näher beschrieben.

Fig. 5 zeigt eine perspektivische Ansicht des Verfahrschlittens 20 mit dem darauf angeordneten innenliegenden Messtaster 7 und dem außenliegenden Messtaster 9, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass am Verfahrschlitten 20 ein Messtasterblock 40 angeordnet ist, welcher eine Messtasternase 41 aufweist. Die Messtasternase 41 bildet den innenliegenden Messtaster 7 und weist die Abtastfläche 8 des innenliegenden Messtasters 7 auf. Die Messtasternase 41 ist vorzugsweise gegenüber dem Körper des Messtasterblockes 40 vorstehend ausgebildet, sodass ein zu vermessendes, hohlzylindrisches Objekt 2 auf mehrere im Kreis angeordnete Messtasterblöcke 40 aufgeschoben werden kann. Der außenliegende Messtaster 9 wird durch ein Verstellmittel 38 am Messtasterblock 40 gehalten und ist durch das Verstellmittel 38 relativ zum innenliegenden Messtaster 7 verstellbar.

Wie aus Fig. 5 ersichtlich, kann vorgesehen sein, dass das Verstellmittel 38 etwa als Pneumatikzylinder ausgebildet ist. Alternativ dazu kann das Verstellmittel 38 etwa als Hydraulikzylinder oder in Form eines elektromotorischen Antriebes, etwa in Form einer Spindel, ausgebildet sein. Der Wegmesssensor 39 zur Erfassung der Lage des außenliegenden Messtasters 9 ist vorzugsweise in das Verstellmittel 38 integriert. Alternativ dazu ist es auch denkbar, dass der Wegmesssensor 39 für den außenliegenden Messtaster 9 direkt im Bereich des außenliegenden Messtasters 9 angeordnet ist.

Wie aus Fig. 5 weiters ersichtlich, kann vorgesehen sein, dass im Messtasterblock 40 eine Ausnehmung 42 ausgebilet ist, in welche das zu vermessende, hohlzylindrische Objekt 2 eingeschoben werden kann.

Wie weiters ist aus Fig. 5 ersichtlich, kann vorgesehen sein, dass der Messtasterblock 40 keilförmig und sich zum Zentrum hin verjüngend ausgebildet ist. Dies bringt den Vorteil mit sich, dass mehrere im Kreis angeordnete Messtasterblöcke 40, welche an der Messvorrichtung 1 angeordnet sind, sich nicht gegenseitig blockieren, wenn sie mittels deren Verfahrschlitten 20 in Richtung Zentrum 12 verschoben werden.

Der Ordnung halber sei abschließend darauf hingewiesen, dass zum besseren Verständnis des Aufbaus der Messvorrichtung 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Messvorrichtung | 29 | Halterolle |
| 2 | hohlzylindrisches Objekt | 30 | Befestigungsbolzen |
| 3 | Innenwandfläche | 31 | Loch |
| 4 | Außenwandfläche | 32 | Hebelelement |
| 5 | Wandstärke | 33 | Verstellmittel |
| 6 | Messtasteranordnung | 34 | erstes Drehgelenk |
| 7 | innenliegender Messtaster | 35 | zweites Drehgelenk |
| 8 | Abtastfläche innenliegender Messtaster | 36 | Winkelstellung |
| | | 37 | Wegmesssensor |
| 9 | außenliegender Messtaster | 38 | Verstellmittel |
| 10 | Abtastfläche außenliegender Messtaster | 39 | Wegmesssensor |
| | | 40 | Messtasterblock |
| 11 | Gerade | 41 | Messtasternase |
| 12 | Zentrum | 42 | Ausnehmung |
| 13 | Radialrichtung | | |
| 14 | Gehäuse | | |
| 15 | Schieber | | |
| 16 | Basisplatte | | |
| 17 | Anzeigegerät | | |
| 18 | Markiervorrichtung | | |
| 19 | Farbdüse | | |
| 20 | Verfahrschlitten | | |
| 21 | Wegmesssensor | | |
| 22 | Mittel zum Speichern von Energie | | |
| 23 | Konturscheibe | | |
| 24 | Konturfläche | | |
| 25 | Abrollelement | | |
| 26 | Vertiefung | | |
| 27 | äußerer Umfang Konturscheibe | | |
| 28 | Rundung | | |

## Patentansprüche

1. Messvorrichtung (1) zum Messen der Geometrie eines hohlzylindrischen Objektes (2), wobei die Messvorrichtung (1) zumindest drei innenliegende Messtaster (7) mit außen angeordneten Abtastflächen (8) zum Anlegen an eine Innenwandfläche (3) des hohlzylindrischen Objektes (2) und zumindest drei außenliegende Messtaster (9) mit innen angeordneten Abtastflächen (10) zum Anlegen an eine Außenwandfläche (4) des hohlzylindrischen Objektes (2) aufweist, wobei jeweils einem der innenliegenden Messtaster (7) einer der außenliegenden Messtaster (9) zugehörig ist, wobei jeweils der außenliegende Messtaster (9) mittels eines Verstellmittels (38) der Messvorrichtung (1), beispielsweise eines Pneumatikzylinders, relativ zum innenliegenden Messtaster (7) verstellbar ist und jeweils ein Wegmesssensor (39) der Messvorrichtung (1) ausgelegt ist, die aktuelle Position des außenliegenden Messtasters (9) relativ zum innenliegenden Messtaster (7) aufzunehmen.

2. Messvorrichtung nach Anspruch 1, **dadurch gekennzeichnet, dass** jeweils sowohl der innenliegende Messtaster (7) als auch der jeweils zugehörige außenliegende Messtaster (9) auf einem gemeinsamen Verfahrschlitten (20) angeordnet sind und dadurch in Radialrichtung (13) verstellbar sind, wobei jeweils ein weiterer Wegmesssensor (21) der Vorrichtung (1) ausgelegt ist, die aktuelle Position des Verfahrschlittens (20) aufzunehmen.

3. Messvorrichtung nach Anspruch 2, **dadurch gekennzeichnet, dass** die Verfahrschlitten (20) durch ein zur Vorrichtung (1) gehörendes Mittel zum Speichern von Energie (22), wie etwa eine Druckfeder, radial nach außen gedrückt sind und dass eine Konturscheibe (23) zum Verstellen der Verfahrschlitten (20) ausgebildet ist, wobei jeder der Verfahrschlitten (20) ein Abrollelement (25) aufweist, welches an einer innenliegenden Konturfläche (24) der Konturscheibe (23) anliegt.

4. Messvorrichtung nach Anspruch 3, **dadurch gekennzeichnet, dass** die Konturscheibe (23) mittels drei außenliegender Halterollen (29) drehbar gelagert ist.

5. Messvorrichtung nach Anspruch 3 oder 4, **dadurch gekennzeichnet, dass** die Konturscheibe (23) mittels einem weiteren Verstellmittel (33) der Messvorrichtung (1) in dessen Winkelstellung (36) verstellbar ist.

6. Messvorrichtung nach Anspruch 5, **dadurch gekennzeichnet, dass** das weitere Verstellmittel (33) durch einen Linearzylinder, insbesondere einen Pneumatikzylinder, gebildet ist, wobei der Linearzylinder an einem äußeren Umfang (27) der Konturscheibe (23) befestigt ist.

7. Messvorrichtung nach einem der vorhergehenden Ansprüche, **dadurch gekennzeichnet, dass** eine Markiervorrichtung (18) der Messvorrichtung (1) zum Markieren eines vermessenen hohlzylindrischen Objektes (2) ausgebildet ist.

8. Messvorrichtung nach Anspruch 7, **dadurch gekennzeichnet, dass** die Markiervorrichtung (18) zumindest eine Farbdüse (19) zum Aufbringen eines Farbmittels auf die Außenwandfläche (4) des hohlzylindrischen Objektes (2) umfasst.

9. Messvorrichtung nach einem der vorhergehenden Ansprüche, **dadurch gekennzeichnet, dass** die Abtastflächen (8, 10) des innenliegenden Messtasters (7) und des außenliegenden Messtasters (9) auf einer durch das Zentrum (12) der Messtasteranordnung (6) verlaufenden Geraden (11) liegen.

10. Messverfahren zum Vermessen der Geometrie eines hohlzylindrischen Objektes (2), insbesondere unter Verwendung einer Messvorrichtung (1) nach einem der vorhergehenden Ansprüche, wobei die Messvorrichtung (1) zumindest drei innenliegende Messtaster (7) mit außen angeordneten Abtastflächen (8) zum Anlegen an eine Innenwandfläche (3) des hohlzylindrischen Objektes (2) und zumindest drei außenliegende Messtaster (9) mit innen angeordneten Abtastflächen (10) zum Anlegen an eine Außenwandfläche (4) des hohlzylindrischen Objektes (2) aufweist, wobei jeweils einer der innenliegenden Messtaster (7) einem der außenliegenden Messtaster (9) zugehörig ist, wobei das Messverfahren folgende Verfahrensschritte umfasst:
- Bereitstellen der innenliegenden Messtaster (7) und der außenliegenden Messtaster (9) in einer Objektaufnahmestellung;
- Einsetzen des zu vermessenden hohlzylindrischen Objektes (2) in die Messvorrichtung (1);
- Auseinanderfahren der innenliegenden Messtaster (7) bis diese mit ihren außen angeordneten Abtastflächen (8) an der Innenwandfläche (3) des hohlzylindrischen Objektes (2) anliegen;
- Verfahren der außenliegenden Messtaster (9) bis diese mit ihren innen angeordneten Abtastflächen (10) an der Außenwandfläche (4) des hohlzylindrischen Objektes (2) anliegen;
- Messen der Geometriedaten des hohlzylindrischen Objektes (2);
- Freigeben des hohlzylindrischen Objektes (2) durch Verfahren der innenliegenden Messtaster (7) und der außenliegenden Messtaster (9) in die Objektaufnahmestellung.

11. Verfahren nach Anspruch 10, **dadurch gekennzeichnet, dass** zum Auseinanderfahren der innenliegenden Messtaster (7) diese mit den außenliegenden Messtastern (9) an einem gemeinsamen Verfahrschlitten (20) angeordnet sind, wobei der Verfahrschlitten (20) durch ein Mittel zum Speichern von Energie (22), wie etwa eine Druckfeder, nach außen gedrückt wird und wobei eine Konturscheibe (23) zum Verstellen der Verfahrschlitten (20) ausgebildet ist und jeder der Verfahrschlitten (20) ein Abrollelement (25) aufweist, welches an einer innenliegenden Konturfläche (24) der Konturscheibe (23) anliegt und wobei durch eine Verdrehung der Konturscheibe (23) die Verfahrschlitten (20) in radialer Richtung verstellt werden können, wobei die Konturscheibe (23) zum Messen in eine Messstellung verdreht wird, in welcher die innenliegenden Messtaster (7) durch die Federkraft belastet an die Innenwandfläche (3) des hohlzylindrischen Objektes (2) gedrückt werden und in welcher sich die innenliegende Konturfläche (24) der Konturscheibe (23) von den Abrollelementen (25) abhebt.

12. Verfahren nach Anspruch 10 oder 11, **dadurch gekennzeichnet, dass** vor dem Freigeben des hohlzylindrischen Objektes (2) dieses, wenn es als Gutteil ermittelt wird, mittels einer Farbdüse (19) markiert wird.

13. Verfahren nach einem der Ansprüche 10 bis 12, **dadurch gekennzeichnet, dass** an einem Anzeigegerät (17), insbesondere einem Bildschirm, die Sollabmessungen der Geometrie des hohlzylindrischen Objektes (2) in Form eines Toleranzbereiches angezeigt werden und dass die aktuellen Istabmessungen der Geometrie des hohlzylindrischen Objektes (2) grafisch dargestellt werden.

14. Verfahren nach einem der Ansprüche 10 bis 13, **dadurch gekennzeichnet, dass** die zu vermessende Type des hohlzylindrischen Objektes (2) voreingestellt werden kann, sodass die Objektaufnahmestellung an die Geometrie des hohlzylindrischen Objektes (2) angepasst ist.

15. Verfahren nach einem der Ansprüche 10 bis 14, **dadurch gekennzeichnet, dass** die außenliegenden Messtaster (9) nach innen gefahren werden, wenn die Konturscheibe (23) ihre Messstellung erreicht hat.

16. Verfahren nach einem der Ansprüche 10 bis 15, **dadurch gekennzeichnet, dass** eine Wandstärke des hohlzylindrischen Objektes (2) durch die Relativposition des außenliegenden Messtasters (9) zum innenliegenden Messtaster (7) gemessen wird.

## Claims

1. Measuring device (1) for measuring the geometry of a hollow cylindrical object (2), wherein the measuring device (1) comprises at least three inner measuring sensors (7) with externally arranged sensing surfaces (8) for applying to an inner wall surface (3) of the hollow cylindrical object (2) and at least three outer measuring sensors (9) with internally arranged sensor surfaces (10) for applying to an outer wall surface (4) of the hollow cylindrical object (2), wherein in each case one of the inner measuring sensors (7) corresponds to one of the outer measuring sensors (9), wherein in each case the outer measuring sensor (9) is displaceable relative to the inner measuring sensor (7) by way of a displacement means (38) of the measuring device (1), for example a pneumatic cylinder, and in each case a path measurement sensor (39) of the measuring device (1) is configured to record the current position of the outer measuring sensor (9) relative to the inner measuring sensor (7).

2. Measuring device according to claim 1 **characterised in that** in each case the inner measuring sensor (7) as well as the appurtenant outer measuring sensor (9) are arranged on a joint movable carriage (20) and are thereby displaceable in the radial direction (13), wherein in each case a further path measurement device (21) of the device (1) is configured to record the current position of the movable carriage (20).

3. Measuring device according to claim 2 **characterised in that** the movable carriages (20) are pressed radially outwards by a means of storing energy (22), such as a compression spring, forming part of the device (1) and **in that** a contoured disc (23) for displacing the movable carriages (20) is provided, wherein each of the movable carriages (20) comprises a rolling element (25) which is in contact on an inner contoured surface (24) of the contoured disc (23).

4. Measuring device according to claim 3 **characterised in that** the contoured disc (23) is borne in a rotatable manner by means of three external retaining rollers (29).

5. Measuring device according to claim 3 or 4 **characterised in that** the angular position (36) of the contoured disc (23) is adjustable by way of a further displacement means (33) of the measuring device (1).

6. Measuring device according to claim 5 **characterised in that** the further displacement means (33) is in the form of a linear cylinder, in particular a pneumatic cylinder, wherein the linear cylinder is attached on an outer circumference (27) of the contoured disc (23).

7. Measuring device according to any one of the preceding claims **characterised in that** a marking device (18) of the measuring device (1) is provided for marking a measured hollow cylindrical object (2).

8. Measuring device according to claim 7 **characterised in** the marking device (18) comprises at least one colouring agent nozzle (19) for applying a colouring agent to the outer wall surface (4) of the hollow cylindrical object (2).

9. Measuring device according to any one of the preceding claims **characterised in that** the sensing surfaces (8, 10) of the inner measuring sensor (7) and of the outer measuring sensor (9) are on a straight line (11) running through the centre (12) of the measuring sensor arrangement (6).

10. Measuring method for measuring the geometry of a hollow cylindrical object (2), in particular using a measuring device (1) according to any one of the preceding claims, wherein the measuring device (1) comprises at least three internal measuring sensors (7) with externally arranged sensing surfaces (8) for applying to an inner wall surface (3) of the hollow cylindrical object (2) and at least three outer measuring sensors (9) with internally arranged sensing surfaces (10) for applying to an outer wall surface (4) of the hollow cylindrical object (2), wherein in each case one of the inner measuring sensors (7) corresponds to one of the outer measuring sensors (9), wherein
the measuring method comprises the following steps:
- providing the inner measuring sensor (7) and the outer measuring sensor (9) in an object receiving position;
- inserting the hollow cylindrical object (2) to be measured into the measuring device (1);
- moving the inner measuring sensors (7) apart until they are in contact with their externally arranged sensing surfaces (8) on the inner wall surface (3) of the hollow cylindrical object (2);
- moving the outer measuring sensors (9) until they are in contact with their internally arranged sensing surfaces (10) on the outer wall surface (4) of the hollow cylindrical object (2);
- measuring the geometry data of the hollow cylindrical object (2);
- releasing the hollow cylindrical object (2) by moving the inner measuring sensors (7) and the outer measuring sensors (9) into the object receiving position.

11. Method according to claim 10 **characterised in that** to move the inner measuring sensors (7) apart, these are arranged with the outer measuring sensors (9) on a joint movable carriage (20), wherein the movable carriage (20) is pushed outwards by way of a means of storing energy (22), such as a compression spring, and wherein a contoured disc (23) for displacing the movable carriage (20) is provided and each of the movable carriages (20) comprises a roller element (25) which is in contact with an inner contoured surface (24) of the contoured disc (23) and wherein through turning the contoured disc (23) the movable carriages (20) can be displaced in the radial direction, wherein for measuring the contoured disc (23) is turned into a measuring position in which the inner measuring sensors (7) are pressed by the spring force onto the inner wall surfaces (3) of the hollow cylindrical object (2) and in which the inner contoured surface (24) of the contoured disc (23) stands out from the roller elements (25).

12. Method according to claim 10 or 11 **characterised in that** before the release of the hollow cylindrical object (2), if it is determined to be a good part, it is marked by means of a colouring agent nozzle (19).

13. Method according to any one of claims 10 to 12 **characterised in that** on a display device (17), more particularly a screen, the nominal dimensions of the geometry of the hollow cylindrical object (2) are shown in the form of a tolerance range, and **in that** the actual dimensions of the geometry of the hollow cylindrical object (2) are shown graphically.

14. Method according to any one of claims 10 to 13 **characterised in that** the type of hollow cylindrical object (2) to be measured can be pre-set so that the object receiving position can be adapted to the geometry of the hollow cylindrical object (2).

15. Method according to any one of claims 10 to 14 **characterised in that** the outer measuring sensors (9) are moved inwards when the contoured disc (23) has reached its measuring position.

16. Method according to any one of claims 10 to 15 **characterised in that** a wall thickness of the hollow cylindrical object (2) is measured by way of the relative position of the outer measuring sensor (9) with regard to the inner measuring sensor (7).

## Revendications

1. Dispositif de mesure (1) destiné à la mesure de la géométrie d'un objet (2) cylindrique creux, le dispositif de mesure (1) comprenant au moins trois palpeurs de mesure (7) internes avec des surfaces de palpage (8) disposées à l'extérieur destinées à être posées contre une surface de paroi intérieure (3) de l'objet (2) cylindrique creux et au moins trois palpeurs de mesure (9) externes avec des surfaces de palpage (10) disposées à l'intérieur destinées à être posées contre une surface de paroi extérieure (4) de l'objet (2) cylindrique creux, un des palpeurs de mesure (7) internes étant respectivement associé à l'un des palpeurs de mesure (9) externes, le palpeur de mesure (9) externe pouvant être déplacé relativement au palpeur de mesure (7) intérieur au moyen d'un moyen de déplacement (38) du dispositif de mesure (1), par exemple un vérin pneumatique, et respectivement un capteur de mesure de déplacement (39) du dispositif de mesure (1) étant conçu pour enregistrer la position actuelle du palpeur de mesure (9) externe relativement au palpeur de mesure (7) interne.

2. Dispositif de mesure selon la revendication 1, **caractérisé en ce que** respectivement aussi bien le palpeur de mesure (7) interne que le palpeur de mesure (9) externe respectivement associé sont disposés sur un chariot de déplacement (20) commun et peuvent ainsi être déplacés dans la direction radiale (13), respectivement un autre capteur de mesure de déplacement (21) du dispositif (1) étant conçu pour enregistrer la position actuelle du chariot de déplacement (20).

3. Dispositif de mesure selon la revendication 2, **caractérisé en ce que** les chariots de déplacement (20) sont pressés radialement vers l'extérieur par un moyen d'accumulation d'énergie (22) faisant partie du dispositif (1), comme par exemple un ressort de pression, et **en ce qu'**un disque de contour (23) est constitué pour le déplacement des chariots de déplacement (20), chacun des chariots de déplacement (20) comportant un élément de roulement (25) qui est adjacent à une surface profilée (24) interne du disque profilé (23).

4. Dispositif de mesure selon la revendication 3, **caractérisé en ce que** le disque profilé (23) est supporté en rotation au moyen de trois rouleaux de retenue (29) externes.

5. Dispositif de mesure selon la revendication 3 ou 4, **caractérisé en ce que** le disque profilé (23) peut être déplacé au moyen de la position angulaire (36) d'un autre moyen de déplacement (33) du dispositif de mesure (1).

6. Dispositif de mesure selon la revendication 5, **caractérisé en ce que** l'autre moyen de déplacement (33) est formé par un vérin linéaire, en particulier un vérin pneumatique, le vérin linéaire étant fixé sur une circonférence extérieure (27) du disque profilé (23).

7. Dispositif de mesure selon l'une des revendications précédentes, **caractérisé en ce qu'**un dispositif de marquage (18) du dispositif de mesure (1) est constitué pour le marquage d'un objet (2) cylindrique creux mesuré.

8. Dispositif de mesure selon la revendication 7, **caractérisé en ce que** le dispositif de marquage (18) comprend au moins une buse de peinture (19) destinée à appliquer un colorant sur la surface de paroi extérieure (4) de l'objet (2) cylindrique creux.

9. Ensemble selon l'une des revendications précédentes, **caractérisé en ce que** les surfaces de palpage (8, 10) du palpeur de mesure (7) interne et du palpeur de mesure (9) externe sont situées sur une droite (11) traversant le centre (12) de l'ensemble de palpeur de mesure (6).

10. Procédé de mesure destiné à mesurer la géométrie d'un objet (2) cylindrique creux, en particulier en utilisant un dispositif de mesure (1) selon l'une des revendications précédentes, le dispositif de mesure (1) comprenant au moins trois palpeurs de mesure (7) intérieurs avec des surfaces de palpage (8) disposées à l'extérieur destinées à être posées contre une surface de paroi intérieure (3) de l'objet (2) cylindrique creux, et au moins trois palpeurs de mesure (9) externes avec des surfaces de palpage (10) disposées à l'intérieur destinées à être posées contre une surface de paroi extérieure (4) de l'objet (2) cylindrique creux, respectivement un des palpeurs de mesure (7) internes étant associé à l'un des palpeurs de mesure (9) externes, le procédé de mesure comportant les étapes de procédé suivantes :
- fourniture des palpeurs de mesure (7) internes et des palpeurs de mesure (9) externes dans une position d'enregistrement de l'objet ;
- introduction de l'objet (2) cylindrique creux à mesurer dans le dispositif de mesure (1) ;
- éloignement des palpeurs de mesure (7) internes jusqu'à ce que ceux-ci soient, par leurs surfaces de palpage (8) disposées à l'extérieur, adjacents à la surface de paroi intérieure (3) de l'objet (2) cylindrique creux ;
- déplacement des palpeurs de mesure (9) externes jusqu'à ce que ceux-ci soient, par leurs surfaces de palpage (10) disposées à l'intérieur, adjacents à la surface de paroi extérieure (4) de l'objet (2) cylindrique creux ;
- mesure des données géométriques de l'objet (2) cylindrique creux ;
- libération de l'objet (2) cylindrique creux par le déplacement des palpeurs de mesure (7) internes et des palpeurs de mesure (9) externes dans la position d'enregistrement de l'objet.

11. Procédé selon la revendication 10, **caractérisé en ce que**, pour l'éloignement des palpeurs de mesure (7) internes, ceux-ci sont disposés avec les palpeurs de mesure (9) externes sur un chariot de déplacement (20) commun, le chariot de déplacement (20) étant pressé vers l'extérieur par un moyen d'accumulation d'énergie (22), tel qu'un ressort de pression, et un disque profilé (23) étant constitué pour le déplacement des chariots de déplacement (20), et chacun des chariots de déplacement (20) comportant un élément de roulement (25) qui est adjacent à une surface profilée (24) interne du disque profilé (23), et les chariots de déplacement (20) pouvant être déplacés dans la direction radiale par une rotation du disque profilé (23), le disque profilé (23) étant pour la mesure mis en rotation vers une position de mesure dans laquelle les palpeurs de mesure (7) internes sont chargés par la force de ressort contre la surface de paroi intérieure (3) de l'objet (2) cylindrique creux, et dans laquelle la surface profilée (24) interne du disque profilé (23) se soulève par rapport aux éléments de roulement (25).

12. Procédé selon la revendication 10 ou 11, **caractérisé en ce que**, avant la libération de l'objet (2) cylindrique creux, celui-ci est marqué au moyen d'une buse de peinture (19) quand il est déterminé comme étant une bonne pièce.

13. Procédé selon l'une des revendications 10 à 12, **caractérisé en ce que**, sur un appareil d'affichage (17), en particulier un écran, les dimensions théoriques de la géométrie de l'objet (2) cylindrique creux sont affichées sous la forme d'une plage de tolérance, et **en ce que** les dimensions effectives actuelles de la géométrie de l'objet (2) cylindrique creux sont représentées sous forme graphique.

14. Procédé selon l'une des revendications 10 à 13, **caractérisé en ce que** le type à mesurer de l'objet (2) cylindrique creux peut être préréglé de telle sorte que la position d'enregistrement de l'objet est adaptée à la géométrie de l'objet (2) cylindrique creux.

15. Procédé selon l'une des revendications 10 à 14, **caractérisé en ce que** les palpeurs de mesure (9) externes sont déplacés vers l'intérieur quand le disque profilé (23) a atteint sa position de mesure.

16. Procédé selon l'une des revendications 10 à 15, **caractérisé en ce qu'**une épaisseur de paroi de l'objet (2) cylindrique creux est mesurée par la position relative du palpeur de mesure (9) externe par rapport au palpeur de mesure (7) interne.
